# FASCICULE DE BREVET EUROPEEN

(11) **EP 3 337 208 B1**
(45) Date de publication et mention de la délivrance du brevet: **17.04.2019**
(21) Numéro de dépôt: 17204124.6
(22) Date de dépôt: 28.11.2017
(51) Int. Cl.: H04W 12/00, H04L 12/58

(54) **PROCÉDÉ ET DISPOSITIF DE TRANSMISSION D'UN MESSAGE**
VERFAHREN UND VORRICHTUNG ZUR ÜBERTRAGUNG EINER NACHRICHT
METHOD AND DEVICE FOR TRANSMITTING A MESSAGE

(30) Priorité: 15.12.2016 FR 1662510
(43) Date de publication de la demande: 20.06.2018
(73) Titulaire: Orange, 75015 Paris (FR)
(72) Inventeur: BOUVET, Bertrand, 22700 Perros-Guirec (FR)
(74) Mandataire: Vidon Brevets & Stratégie

(56) Documents cités:
- WO-A2-03/005664
- US-A1- 2008 025 316

## Description

### 1. Domaine de l'invention

L'invention concerne le domaine des réseaux de communication, et plus particulièrement la portabilité d'identifiants publics Internet utilisés pour établir des communications sur de tels réseaux.

### 2. Art Antérieur

Lorsqu'un utilisateur s'abonne auprès d'un premier opérateur de réseau Internet, aussi appelé fournisseur d'accès Internet, le premier opérateur de réseau Internet lui attribue une adresse de courrier électronique (e-mail en anglais, courriel en français). Une telle adresse de courrier électronique permet à l'utilisateur d'émettre et de recevoir des courriers électroniques, via un serveur de courrier électronique du premier opérateur de réseau Internet.

Lorsque l'utilisateur résilie son abonnement d'accès Internet auprès du premier opérateur de réseau Internet pour s'abonner auprès d'un deuxième opérateur de réseau Internet, l'adresse de courrier électronique attribuée à l'utilisateur par le premier opérateur de réseau Internet n'est plus valide. En effet, suite à la résiliation de l'abonnement de l'utilisateur, le premier opérateur de réseau Internet supprime les données de l'utilisateur de ses bases de données afin de récupérer les ressources utilisées par cet utilisateur.

Ainsi, un utilisateur qui change d'opérateur de réseau Internet ne peut plus recevoir de courriers électroniques envoyés à l'adresse de courrier électronique attribuée par le premier opérateur de réseau Internet.

Or, les adresses de courriers électroniques sont de plus en plus utilisées pour des usages tels que des échanges avec des administrations, des échanges professionnels, ....

Ainsi, le changement d'opérateurs de réseau Internet n'est pas favorisé pour les utilisateurs et notamment les travailleurs indépendants, ou les petites entreprises qui ne possèdent pas de nom de domaine propre et utilisent les adresses de courriers électroniques attribuées par l'opérateur de réseau Internet pour leurs échanges professionnels. La modification de leurs données de contact et notamment de leur adresse de courrier électronique peut être préjudiciable à leur entreprise (messages importants non reçus, échec de l'envoi d'un message transmis à leurs contacts, etc...).

Il existe des fournisseurs de services tels que des OTT (pour Over The Top en anglais) qui fournissent des services de communication sur le réseau Internet mais ne disposent pas d'infrastructures de réseau. De tels fournisseurs de service proposent un service de messagerie électronique offrant une adresse de courrier électronique via laquelle un utilisateur peut émettre ou recevoir des messages électroniques. Par exemple Google™ offre un service de courrier électronique gratuit utilisant le nom de domaine "gmail.com". L'adresse de courrier électronique fournie par de tels fournisseurs de service est ainsi indépendante d'un opérateur de réseau Internet. Cependant, de tels fournisseurs de service mettent en oeuvre des mécanismes d'analyse des activités de l'utilisateur et ont des politiques de confidentialité des données qui ne sont pas forcément compatibles avec la confidentialité nécessitée par l'activité professionnelle d'un utilisateur. Dès lors, un utilisateur peut être réticent à utiliser l'adresse de courrier électronique fournie par de tels fournisseurs de service pour ses activités professionnelles ou ses échanges avec des administrations (fiscales, bancaires, etc...).

Dans le cas d'un abonnement téléphonique mobile ou fixe, lorsqu'un utilisateur change d'opérateur de téléphonie, il existe un mécanisme de portabilité qui permet à l'utilisateur de conserver le numéro de téléphone attribué par le premier opérateur de téléphonie lorsqu'il s'abonne auprès d'un deuxième opérateur de téléphonie.

Un tel mécanisme de portabilité d'un numéro de téléphone est basé sur un format standardisé du numéro de téléphone (format E.164 de l'UIT pour Union Internationale des Télécommunications). Chaque opérateur téléphonique achète auprès de l'organisme national en charge des télécommunications (ARCEP pour Autorité de Régulation des Communications Electroniques et des Postes, en France) des tranches de numéros de téléphone et les attribuent à ses abonnés. Lorsqu'un utilisateur change d'opérateur téléphonique en conservant son numéro de téléphone, le nouvel opérateur téléphonique fait inscrire dans une base de données nationale appelée SPN (pour Serveur de Portabilité de Numéros) le numéro de téléphone de l'utilisateur en association avec un préfixe identifiant le nouvel opérateur téléphonique et éventuellement un service associé, tel que téléphonie fixe ou mobile, technologie circuit ou VoIP (pour Voice Over IP en anglais), etc...

A chaque appel téléphonique, la base de données SPN est interrogée en lui fournissant en entrée le numéro de téléphone appelé. Si le numéro de téléphone appelé n'est pas porté, i.e. s'il n'est pas dans la base de données SPN, le même numéro de téléphone est fourni en sortie. Si le numéro de téléphone est porté, i.e. si le numéro de téléphone est dans la base SPN, le numéro de téléphone fourni en sortie est un numéro de téléphone comprenant le préfixe associé au deuxième opérateur et le numéro de téléphone. L'appel est ensuite transmis vers le réseau de l'opérateur identifié par le préfixe si le numéro de téléphone est porté ou l'opérateur ayant acheté le numéro de téléphone si le numéro de téléphone n'est pas porté.

Cependant, un tel mécanisme de portabilité du numéro de téléphone n'est pas adapté à la portabilité d'une adresse de courrier électronique fournie par un opérateur de réseau Internet. En effet, une adresse de courrier électronique fournie par un opérateur de réseau Internet est liée à un nom de domaine de l'opérateur de réseau Internet et non à un préfixe téléphonique. La transmission de messages électroniques depuis ou vers une adresse de courrier électronique utilise une adresse IP (pour Internet Protocol en anglais) d'un serveur de messagerie de l'opérateur de réseau Internet, l'adresse IP d'un tel serveur étant obtenue à partir du nom de domaine associé à l'adresse de courrier électronique.

De plus, une adresse de courrier électronique, par exemple "prenom.nom@nomdedomaineoperateur.fr" est généralement composée d'une partie dite utilisateur "prénom.nom" souvent définie par l'utilisateur lui-même, et d'une partie dite opérateur "nomdedomaineoperateur.fr" identifiant un nom de domaine de l'opérateur de réseau Internet ou du fournisseur de service. La partie utilisateur d'une adresse de courrier électronique n'est pas forcément unique comme l'est un numéro de téléphone puisque les adresses de courrier électronique ne sont pas distribuées entre les opérateurs de réseau Internet ou fournisseur de service. C'est l'utilisateur lui-même ou l'opérateur ou fournisseur de service qui fixe la partie utilisateur. Ainsi, une même partie utilisateur peut être utilisée pour deux utilisateurs différents s'ils sont abonnés auprès d'opérateurs différents. Les adresses de courriers électroniques différeront dans ce cas par la partie opérateur de l'adresse de courrier électronique.

Il est à noter également, à l'opposé des numéros de téléphone qui ne fournissent aucune information sur l'opérateur qui en est en charge, que lorsqu'une adresse électronique est communiquée directement ou indirectement vers des tiers, la partie nom de domaine fournit implicitement et facilement des informations sur l'utilisateur de l'adresse électronique qui peuvent lui être préjudiciables. Par exemple, le nom de domaine de l'adresse électronique peut révéler un caractère plus ou moins sérieux de l'utilisateur en fonction du contexte d'utilisation de celle-ci (courriel à usage personnel ou professionnel). De plus, la connaissance du nom de domaine utilisé par l'utilisateur peut rendre vulnérable l'utilisateur en facilitant des attaques (sécurité des données personnelles ou professionnelles, ou accès à des services et fraude,...), dans le cas notamment où le nom de domaine est associé à un fournisseur de service ou opérateur connu pour son faible niveau de sécurité.

Le document WO03005664A2 décrit une méthode pour obtenir une adresse IP d'un utilisateur B avec lequel un utilisateur A souhaite établir une session, à partir d'un numéro de téléphone de l'utilisateur B et d'une base de données de portabilité téléphonique.

Le document US20080025316 décrit une méthode pour obtenir un serveur de nom d'un opérateur auprès duquel un utilisateur est abonné.

L'invention vient remédier aux inconvénients de l'état de l'art.

### 3. Exposé de l'invention

L'invention concerne un procédé de transmission à travers un réseau de communication, d'un message destiné à un premier utilisateur selon la revendication indépendante 1.

Le procédé selon l'invention permet ainsi de fournir un mécanisme de portabilité d'adresse électronique utilisée pour transmettre des messages sur un réseau de communication.
Selon l'invention, une adresse électronique peut correspondre à une adresse de courrier électronique, une URL (pour Uniform Ressource Locator en anglais), ou tout identifiant public utilisé pour identifier un dispositif tel qu'un terminal ou un objet connecté ou pour identifier un utilisateur ou un service sur un réseau de communication.

Selon un mode particulier de réalisation de l'invention, la première adresse électronique est une adresse comprise dans un champ d'adresse de destination du message. Ainsi, selon ce mode particulier de réalisation de l'invention, le premier utilisateur et le deuxième utilisateur correspondent à un même utilisateur destinataire du message.
Ainsi, lorsque l'utilisateur destinataire du message change d'opérateur de réseau Internet, la base de données de portabilité d'adresse électronique permet d'obtenir une adresse électronique valide de l'utilisateur destinataire. Ainsi, l'utilisateur destinataire peut recevoir des messages même lorsque les messages sont adressés à une adresse électronique de l'ancien opérateur de réseau Internet.
De plus, le procédé est également avantageux lorsque l'utilisateur émetteur du message ne connaît pas l'adresse électronique valide du message mais dispose seulement d'une adresse électronique générique de l'utilisateur destinataire du message.

Selon un autre mode particulier de réalisation de l'invention, la première adresse électronique est une adresse comprise dans un champ d'adresse d'émission du message. Ainsi, selon cet autre mode particulier de réalisation de l'invention, il est possible de modifier l'adresse électronique utilisée pour émettre des messages par une adresse électronique, par exemple une adresse électronique générique, mémorisée dans la base de données de portabilité d'adresse électronique en association par exemple avec l'adresse électronique fournie par l'opérateur de réseau Internet auprès duquel l'utilisateur est abonné. Ainsi, un utilisateur émetteur du message, ici le deuxième utilisateur, n'est pas obligé de transmettre à son correspondant l'adresse électronique fournie par son opérateur de réseau Internet. L'utilisateur destinataire du message, ici le premier utilisateur, ne connaîtra que l'adresse électronique générique de l'utilisateur émetteur du message.
Lorsque l'utilisateur destinataire enverra un message de réponse à l'utilisateur émetteur via l'adresse électronique générique de l'utilisateur émetteur, le procédé selon l'invention permettra de transmettre le message de réponse par consultation de la base de données de portabilité d'adresse électronique en fournissant en entrée l'adresse électronique générique de l'utilisateur émetteur.

Selon un autre mode particulier de réalisation de l'invention, l'identifiant public est un numéro de téléphone associé au premier utilisateur. L'étape d'obtention de la deuxième adresse électronique comprend alors les étapes suivantes:
- obtention du numéro de téléphone à partir de la première adresse électronique,
- obtention en provenance d'une base de données de portabilité téléphonique d'un préfixe de portabilité associé au numéro de téléphone,
- obtention en provenance de la base de données de portabilité d'adresse électronique du deuxième nom de domaine, à partir dudit préfixe de portabilité,
- génération de la deuxième adresse électronique comprenant le préfixe de portabilité, le numéro de téléphone et le deuxième nom de domaine.
Ce mode particulier de réalisation de l'invention est avantageux lorsque le premier utilisateur dispose d'un abonnement auprès d'un premier opérateur de réseau Internet couplant l'accès au réseau Internet et un service téléphonique. Lorsque le premier utilisateur change d'opérateur de réseau Internet pour s'abonner auprès d'un deuxième opérateur de réseau Internet, de manière connue, le premier utilisateur peut conserver le numéro de téléphone attribué par le premier opérateur de réseau Internet grâce au mécanisme de portabilité du numéro de téléphone. Selon ce mode particulier de réalisation de l'invention, le numéro de téléphone porté du premier opérateur de réseau Internet vers le deuxième opérateur de réseau Internet est ainsi utilisé pour générer une adresse électronique de destination des messages destinés au premier utilisateur et envoyés à l'adresse électronique fournie par le premier opérateur de réseau Internet.
Selon ce mode particulier de réalisation de l'invention, la base de données de portabilité d'adresse électronique est simple à mettre en oeuvre et ne nécessite que de mémoriser les noms de domaine associés au préfixe de portabilité téléphonique.

Selon un autre mode particulier de réalisation de l'invention, le message est reçu en provenance d'un serveur d'un opérateur de réseau associé au premier nom de domaine. Selon cet autre mode particulier de réalisation de l'invention, le procédé de transmission est mis en oeuvre au moins par un serveur du réseau de communication différent d'un serveur d'un opérateur de réseau associé au premier nom de domaine. Par exemple, le serveur associé au premier nom de domaine transmet le message au serveur du réseau de communication lorsqu'il détecte que le premier utilisateur n'est plus abonné auprès de l'opérateur réseau du premier domaine.
Par exemple, le serveur du réseau de communication est un serveur qui est mutualisé entre les opérateurs de réseau de communication. Ainsi, l'impact de la portabilité de l'adresse électronique est limité chez les opérateurs de réseau.

Selon un autre mode particulier de réalisation de l'invention, l'identifiant public correspond à la première adresse électronique. Selon ce mode particulier de réalisation de l'invention, la base de données de portabilité d'adresse électronique mémorise une première adresse électronique fournie par un premier opérateur de réseau Internet en association avec une deuxième adresse électronique fournie par un deuxième opérateur de réseau Internet. Ainsi, selon ce mode particulier de réalisation de l'invention, il n'est pas nécessaire pour le premier utilisateur d'avoir un abonnement auprès d'un opérateur couplant l'accès au réseau Internet et un service de téléphonie.

Les différents modes ou caractéristiques de réalisation précités peuvent être ajoutés indépendamment ou en combinaison les uns avec les autres, aux étapes du procédé de transmission défini ci-dessus.

L'invention concerne également un dispositif de transmission, à travers un réseau de communication, d'un message destiné à un premier utilisateur selon la revendication indépendante 4.

Selon un mode particulier de réalisation de l'invention, le dispositif de transmission est compris dans un serveur.
Ce dispositif de transmission pourra bien sûr comporter les différentes caractéristiques relatives au procédé de transmission selon l'invention. Ainsi, les caractéristiques et avantages de ce dispositif de transmission sont les mêmes que ceux du procédé de transmission, et ne sont pas détaillés plus amplement.

L'invention concerne aussi un procédé de portabilité d'une première adresse électronique d'un utilisateur mis en oeuvre par une base de données de portabilité d'adresse électronique selon la revendication indépendante 6.

Selon un mode particulier de réalisation de l'invention, l'information obtenue à partir de ladite première adresse électronique correspond à ladite première adresse électronique, et l'identifiant correspond à la deuxième adresse électronique mémorisée dans la base de données de portabilité d'adresse électronique en association avec ladite première adresse électronique.

Selon un autre mode particulier de réalisation de l'invention, l'information obtenue à partir de ladite première adresse électronique correspond à un préfixe de portabilité téléphonique obtenu à partir d'un numéro de téléphone de l'utilisateur, et l'identifiant est un nom de domaine mémorisé dans la base de données de portabilité d'adresse électronique en association avec ledit préfixe de portabilité téléphonique.

L'invention concerne également une base de données de portabilité d'une première adresse électronique d'un utilisateur selon la revendication indépendante 7.

Cette base de données de portabilité pourra bien sûr comporter les différentes caractéristiques relatives au procédé de portabilité selon l'invention. Ainsi, les caractéristiques et avantages de la base de données de portabilité sont les mêmes que ceux du procédé de portabilité, et ne sont pas détaillés plus amplement.

L'invention concerne également un programme d'ordinateur selon la revendication indépendante 8. Un tel programme peut utiliser n'importe quel langage de programmation. Il peut être téléchargé depuis un réseau de communication et/ou enregistré sur un support lisible par ordinateur. Le procédé de transmission selon l'invention peut être mis en oeuvre de diverses manières, notamment sous forme câblée ou sous forme logicielle.

L'invention concerne aussi un support d'enregistrement, selon la revendication 9, lisible par ordinateur sur lequel est enregistré un programme d'ordinateur tel que cité précédemment.

Le procédé de portabilité selon l'invention peut être mis en oeuvre de diverses manières, notamment sous forme câblée ou sous forme logicielle.

L'invention concerne aussi un système de transmission à travers un réseau de communication, d'un message comprenant une première adresse électronique d'un utilisateur selon la revendication 10.

### 4. Liste des figures

D'autres caractéristiques et avantages de l'invention apparaîtront plus clairement à la lecture de la description suivante de modes de réalisation particuliers, donnés à titre de simples exemples illustratifs et non limitatifs, et des dessins annexés, parmi lesquels :
- la figure 1 illustre un environnement de mise en oeuvre de l'invention selon un mode particulier de réalisation de l'invention,
- la figure 2 illustre des étapes du procédé de transmission selon un mode particulier de réalisation de l'invention,
- la figure 3 illustre des étapes du procédé de transmission selon un autre mode particulier de réalisation de l'invention,
- la figure 4 illustre un environnement de mise en oeuvre de l'invention selon un autre mode particulier de réalisation de l'invention,
- la figure 5 illustre des étapes du procédé de transmission selon l'autre mode particulier de réalisation de l'invention,
- la figure 6 illustre des étapes du procédé de portabilité selon un mode particulier de réalisation de l'invention,
- la figure 7 illustre un dispositif de transmission configuré pour mettre en oeuvre le procédé de transmission selon l'un quelconque des modes particuliers de réalisation de l'invention,
- la figure 8 illustre un dispositif de portabilité configuré pour mettre en oeuvre le procédé de portabilité selon l'un quelconque des modes particuliers de réalisation de l'invention.

### 5. Description des modes particuliers de réalisation de l'invention

### 5.1 Principe général

L'invention vise à permettre à un utilisateur qui a changé d'opérateur de réseau Internet de recevoir, via le serveur de réception de messages de son nouvel opérateur de réseau Internet, les messages qui lui sont envoyés à une adresse de destination non valide. En effet, lorsque l'utilisateur passe d'un opérateur de réseau Internet OP1 vers un opérateur de réseau Internet OP2, l'opérateur de réseau Internet OP1 supprime de ses serveurs les données de l'utilisateur. En particulier, l'adresse électronique ADR1 de l'utilisateur fournie par l'opérateur de réseau Internet OP1 n'est plus valide. Selon l'art antérieur, lorsqu'un utilisateur d'un terminal T2 émet un message à destination de l'adresse électronique ADR1 via un réseau de communication, un serveur de réception de message de l'opérateur OP1 renvoie un message d'erreur au terminal T2 pour indiquer que l'adresse ADR1 utilisée n'est pas valide. De son côté, l'utilisateur du terminal T1 ne reçoit pas le message, ni aucune information lui permettant de savoir que l'utilisateur du terminal T2 lui a envoyé un message. Le procédé de transmission décrit ci-dessous vise à permettre que le message envoyé à l'adresse ADR1 soit effectivement transmis à l'utilisateur du terminal T1.

Pour cela, un serveur S_PRX du réseau de communication RES obtient à partir d'au moins une base de données BDD_dom une nouvelle adresse électronique à laquelle le message est transmis.

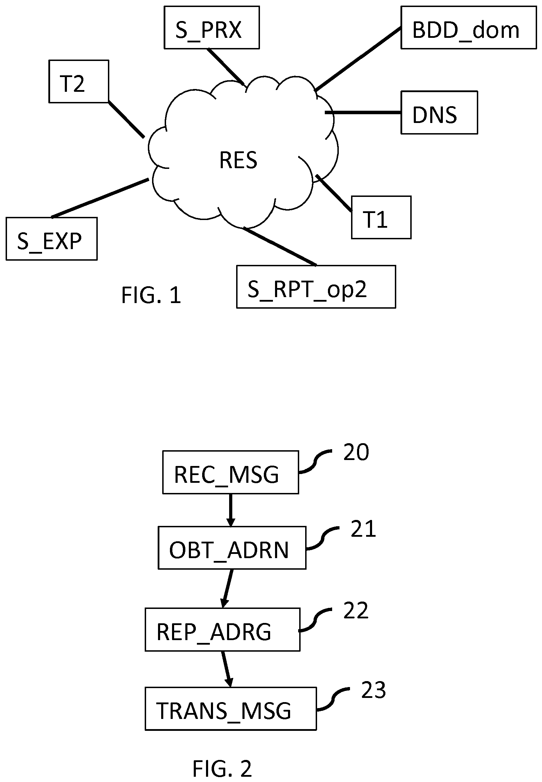

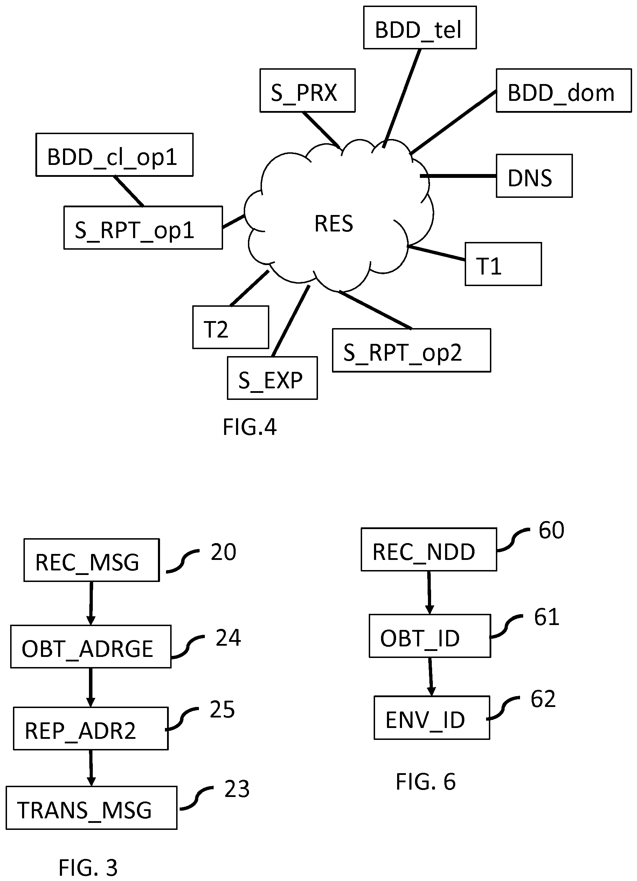

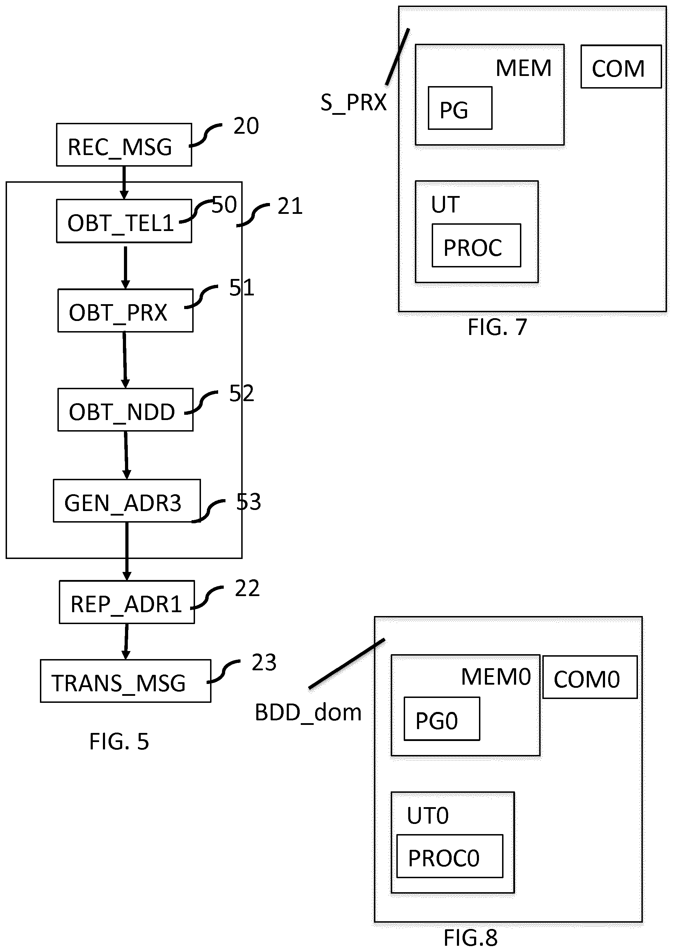

La figure 1 illustre un environnement de mise en oeuvre de l'invention selon un mode particulier de réalisation de l'invention. Selon ce mode particulier de réalisation de l'invention, l'utilisateur du terminal T2 émet un message destiné à l'utilisateur du terminal T1 via un réseau de communication RES.
Le message émis par le terminal T2 comprend dans un champ d'adresse de destination une adresse électronique de l'utilisateur du terminal T1 et dans un champ d'adresse d'émission une adresse électronique de l'utilisateur du terminal T2.
De manière connue, une adresse électronique comprend une partie dite utilisateur, par exemple prénom.nom, et une partie dite opérateur comprenant au moins un nom de domaine permettant d'identifier un serveur de réception de message de l'opérateur gérant l'adresse électronique. L'identification du serveur de réception de message est mise en oeuvre de manière connue par un mécanisme de résolution de nom, via un serveur de résolution de nom DNS (pour Domain Name Server en anglais).
Selon le mode particulier de réalisation de l'invention décrit ici, on suppose que l'une au moins des adresses électroniques d'émission ou de destination du message comprend une adresse électronique générique. Par adresse électronique générique, on entend ici une adresse électronique d'un utilisateur indépendante de l'opérateur de réseau ou du fournisseur de service de messagerie auprès duquel l'utilisateur est abonné. Par exemple, une telle adresse électronique générique d'un utilisateur comprend dans la partie opérateur un nom de domaine générique permettant d'identifier une base de données de portabilité d'adresse électronique. Une telle base de données de portabilité d'adresse électronique est par exemple mutualisée entre les opérateurs de réseau en charge du transport des données circulant via leurs infrastructures. L'adresse électronique générique est par exemple de la forme prénom.nom@mail.fr. La base de données de portabilité d'adresse électronique est ici gérée par des opérateurs de réseau ayant des infrastructures en France (extension en .fr).
Il est bien entendu possible que la base de données de portabilité d'adresse électronique soit gérée au niveau mondial par un ou plusieurs opérateurs, en utilisant un nom de domaine ayant une extension .com par exemple.
L'utilisation d'une telle adresse électronique générique permet ainsi à un utilisateur de ne pas fournir à ses contacts l'adresse électronique fournie par son opérateur réseau ou son fournisseur de service de messagerie. L'utilisation d'une telle adresse électronique générique permet également à l'utilisateur de changer d'opérateur réseau ou de fournisseur de service de messagerie sans avoir à informer tous ses contacts de la modification de son adresse électronique. Son nouvel opérateur réseau ou fournisseur de service de messagerie s'occupera de mettre à jour dans la base de données de portabilité d'adresse électronique l'association entre l'adresse électronique générique de l'utilisateur et l'adresse électronique à laquelle l'utilisateur peut effectivement être contacté, i.e. l'adresse électronique de l'utilisateur comprenant un nom de domaine relatif à un serveur de messagerie de l'opérateur ou du fournisseur de service auprès duquel l'utilisateur est abonné.
Selon l'invention, le réseau de communication RES illustré en figure 1 peut correspondre à n'importe quel type de réseau de données adapté pour transmettre des messages, tel qu'un réseau fixe ou mobile utilisant un protocole Internet (IP pour Internet Protocol en anglais).
La figure 1 illustre un système de transmission de message selon un mode particulier de réalisation de l'invention comprenant notamment:
- un serveur de communication S_PRX configuré pour mettre en oeuvre le procédé de transmission selon l'un quelconque des modes particuliers de réalisation de l'invention décrits ci-après en relation avec les figures 2 et 3,
- une base de données de portabilité d'adresse électronique BDD_dom configurée pour mettre en oeuvre le procédé de portabilité d'adresse électronique selon un mode particulier de réalisation de l'invention décrit ci-après en relation avec la figure 6.
Le système illustré en figure 1 comprend également:
- un serveur DNS de résolution de nom permettant à partir d'un nom de domaine de fournir une adresse IP d'un serveur correspondant au nom de domaine,
- un serveur S_RPT_op2 de réception de message d'un opérateur de réseau op2 auprès duquel l'utilisateur du terminal T1 est effectivement abonné,
- un serveur S_EXP d'envoi de message associé à un logiciel de messagerie du terminal T2. Selon le mode particulier de réalisation décrit ici, le serveur de communication S_PRX est un serveur proxy de portabilité identifié par le nom de domaine générique "mail.fr". Un tel serveur est également mutualisé entre les opérateurs de réseau Internet.

La figure 2 illustre des étapes du procédé de transmission selon un mode particulier de réalisation de l'invention. Selon le mode particulier de réalisation décrit ici, le message émis par le terminal T2 comprend une adresse électronique générique ADRG dans le champ d'adresse de destination.
Lors d'une étape 20, le serveur S_PRX reçoit le message émis par le terminal T2 comprenant dans le champ d'adresse de destination l'adresse générique ADRG.
Un tel message a été transmis au serveur S_PRX par le serveur S_EXP d'envoi de messages associé au logiciel client d'envoi de messages du terminal T2, via la résolution du nom de domaine "mail.fr" compris dans l'adresse de destination auprès du serveur DNS de résolution de nom de domaine.

Lors d'une étape 21, le serveur S_PRX obtient une nouvelle adresse électronique ADRN de l'utilisateur du terminal T1 à partir d'un identifiant public de l'utilisateur du terminal T1. Dans le mode de réalisation décrit ici, un tel identifiant public correspond à l'adresse électronique générique comprise dans le champ d'adresse de destination du message ou bien à la partie utilisateur de cette adresse électronique générique. Lors de l'étape 21, le serveur S_PRX interroge la base de données de portabilité d'adresse électronique BDD_dom en fournissant l'adresse électronique générique ADRG. Le serveur S_PRX reçoit en retour la nouvelle adresse électronique ADRN de l'utilisateur du terminal T1. Une telle adresse électronique ADRN comprend au moins un nom de domaine permettant d'identifier un serveur de réception de message associé à un logiciel client de réception de messages du terminal T1. Par exemple, lorsque l'adresse électronique ADRN correspond à l'adresse électronique fournie par l'opérateur réseau auprès duquel l'utilisateur du terminal T1 est abonné pour son accès au réseau Internet, le nom de domaine de l'adresse électronique ADRN correspond à un nom de domaine de cet opérateur et permet d'identifier un serveur de réception de messages S_RPT_op2 de l'opérateur.
Dans le mode particulier de réalisation de l'invention décrit ici, le nom de domaine compris dans l'adresse électronique ADRN dépend du fournisseur de l'adresse électronique ADRN, i.e. de l'opérateur auprès duquel l'utilisateur du terminal T1 est abonné ou bien du fournisseur de service de messagerie. Le nom de domaine compris dans l'adresse électronique ADRN est donc différent du nom de domaine compris dans l'adresse électronique générique puisqu'il permet d'adresser un serveur de réception de messages S_RPT_op2 via lequel l'utilisateur du terminal T1 peut effectivement recevoir des messages. Lors d'une étape 22, le serveur S_PRX remplace dans le champ d'adresse de destination l'adresse électronique générique ADRG par l'adresse électronique ADRN obtenue depuis la base de données de portabilité d'adresse électronique.
Lors d'une étape 23, le serveur S_PRX transmet le message via le réseau de communication RES à destination du serveur S_RPT_op2 de réception de messages identifié par le nom de domaine compris dans l'adresse électronique ADRN. Pour cela, le serveur S_PRX interroge le serveur DNS de résolution de nom de domaine pour obtenir l'adresse IP associée au nom de domaine compris dans l'adresse électronique ADRN. Puis, le serveur S_PRX envoie le message au serveur S_RPT_op2 de réception de messages correspondant. Ainsi, l'utilisateur du terminal T1 pourra accéder au message via le logiciel client de son terminal T1 et le serveur de réception de messages S_RPT_op2.

La figure 3 illustre des étapes du procédé de transmission selon un autre mode particulier de réalisation de l'invention.

Selon ce mode particulier de réalisation de l'invention, le message émis par le terminal T2 comprend dans un champ d'adresse d'émission une adresse électronique ADR2 de l'utilisateur du terminal T2. Par exemple, l'adresse électronique ADR2 correspond à une adresse électronique fournie par l'opérateur réseau auprès duquel l'utilisateur du terminal T2 est abonné pour son accès au réseau Internet ou bien à une adresse électronique fournie par un fournisseur de service de messages. Une telle adresse électronique ADR2 comprend donc un nom de domaine associé à cet opérateur ou fournisseur de service et permet d'identifier le serveur d'envoi de messages associé au logiciel de messagerie du terminal T2. Le mode de réalisation décrit ici permet à l'utilisateur du terminal T2 de ne pas communiquer l'adresse électronique ADR2 à l'utilisateur du terminal T1 lors de l'envoi de son message. Lors de l'étape 20, le serveur S_PRX reçoit le message émis par le terminal T2 comprenant l'adresse ADR2 dans le champ d'adresse d'émission.
Un tel message a été transmis au serveur S_PRX par le serveur d'expédition S_EXP associé au logiciel client d'envoi de message du terminal T2. Le serveur d'expédition S_EXP comprend par exemple en mémoire une adresse du serveur S_PRX ou bien un nom de domaine générique associé au serveur S_PRX. Dans ce dernier cas, le serveur d'expédition S_EXP obtient l'adresse IP du serveur S_PRX par le mécanisme de résolution de nom via le serveur DNS.
Lors d'une étape 24, le serveur S_PRX obtient une adresse électronique générique ADRGE de l'utilisateur du terminal T2. Lors de l'étape 24, le serveur S_PRX interroge la base de données de portabilité d'adresse électronique BDD_dom en fournissant l'adresse électronique d'émission ARD2 comprise dans le message. Le serveur S_PRX reçoit en retour l'adresse électronique générique ADRGE de l'utilisateur du terminal T2. Une telle adresse électronique générique ADRGE comprend ainsi un nom de domaine indépendant du serveur d'envoi de messages associé au logiciel de messagerie du terminal T2.
Lors d'une étape 25, le serveur S_PRX remplace l'adresse électronique d'émission ADR2 par l'adresse électronique générique ADRGE comprise dans le champ d'adresse d'émission du message.
L'exemple décrit ici peut être mis en oeuvre seulement sur requête explicite de l'utilisateur du terminal T2. Ou bien, les étapes 24 et 25 peuvent être mises en oeuvre de manière systématique lors de l'envoi d'un message par le serveur d'envoi S_EXP.

Le mode de réalisation décrit ici en relation avec la figure 3 peut être mis en oeuvre de manière complémentaire au mode de réalisation décrit en relation avec la figure 2. Ainsi, l'adresse d'émission et l'adresse de destination sont modifiées par le serveur S_PRX.

La figure 4 illustre un environnement de mise en oeuvre de l'invention selon un autre mode particulier de réalisation de l'invention. Dans ce mode particulier de réalisation de l'invention, l'utilisateur du terminal T1 dispose d'un abonnement d'accès au réseau Internet associé à une première adresse électronique ADR1 fournie par un opérateur op1, couplé à un service de téléphonie fourni par le même opérateur op1. L'opérateur op1 fournit donc également à l'utilisateur du terminal T1 un numéro de téléphone TEL1.
L'utilisateur du terminal T1 résilie ses abonnements auprès de l'opérateur op1 et souscrit de nouveaux abonnements (accès au réseau Internet et service de téléphonie) auprès d'un nouvel opérateur op2. Lors de la souscription des abonnements auprès de l'opérateur op2, l'utilisateur du terminal T1 demande la conservation de son numéro de téléphone TEL1 pour le service de téléphonie fourni par l'opérateur op2. Suite à la souscription des abonnements de l'utilisateur du terminal T1, l'opérateur op2 fournit donc à l'utilisateur du terminal T1 une deuxième adresse électronique ADR2 et inscrit dans une base de portabilité téléphonique BDD_tel le portage du numéro de téléphone TEL1 de l'opérateur op1 vers l'opérateur op2. La figure 4 illustre un système de transmission de message selon un mode particulier de réalisation de l'invention comprenant notamment:
- la base de données de portabilité d'adresse électronique BDD_dom configurée pour mettre en oeuvre le procédé de portabilité d'adresse électronique selon un mode particulier de réalisation de l'invention décrit ci-après en relation avec la figure 6,
- le serveur de communication S_PRX configuré pour mettre en oeuvre le procédé de transmission selon l'un quelconque des modes particuliers de réalisation de l'invention décrits ci-après en relation avec la figure 5.
Outre les éléments déjà décrits en relation avec la figure 1, le système illustré en figure 4 comprend également:
- une base de données de portabilité téléphonique BDD_tel dans laquelle sont mémorisés les numéros de téléphone portés d'un premier opérateur à un deuxième opérateur, lorsqu'un utilisateur souhaite changer d'opérateur de service de téléphonie en conservant son numéro de téléphone,
- un serveur S_RPT_op1 de réception de message de l'opérateur de réseau op1 auprès duquel l'utilisateur du terminal T1 a résilié son abonnement d'accès au réseau Internet,
- une base de données clients BDD_cl_op1 de l'opérateur de réseau op1 dans laquelle sont stockées des informations relatives à ses anciens clients, notamment l'utilisateur du terminal T1.
Dans l'exemple décrit ci-après, la base de données de portabilité téléphonique BDD_dom est mutualisée entre des opérateurs de réseau, notamment les opérateurs op1 et op2. Le serveur de communication S_PRX peut être géré par l'opérateur de réseau op1, ou bien mutualisé entre plusieurs opérateurs de réseau. Lorsque le serveur de communication S_PRX est géré par l'opérateur de réseau op1, il est préférable que chaque opérateur de réseau gère également son propre serveur de communication S_PRX afin que le mécanisme de portabilité d'adresse électronique selon ce mode particulier de réalisation de l'invention puisse être fourni à l'ensemble des utilisateurs, et pas seulement à ceux quittant l'opérateur op1.

La figure 5 illustre des étapes du procédé de transmission selon le mode particulier de réalisation de l'invention décrit en relation avec la figure 4. Dans le mode particulier de réalisation décrit ici, le serveur S_PRX est compris dans le serveur de réception de messages S_RPT_op1 de l'opérateur op1.
Selon le mode particulier de réalisation décrit ici, le terminal T2 émet un message à destination de l'utilisateur du terminal T1, comprenant dans le champ d'adresse de destination, l'adresse électronique ADR1. L'adresse électronique ADR1 comprend dans la partie opérateur un nom de domaine identifiant un serveur S_RPT_op1 de réception de messages de l'opérateur op1.
De manière connue, un tel message est transmis au serveur S_RPT_op1 par le serveur S_EXP d'envoi de messages associé au logiciel de messagerie du terminal T2, via la résolution du nom de domaine compris dans l'adresse électronique ADR1 auprès du serveur DNS de résolution de nom de domaine.
Lors de l'étape 20, le serveur S_RPT_op1 reçoit le message émis par le terminal T2 comprenant l'adresse ADR1 dans le champ d'adresse de destination.
Lors de l'étape 21, le serveur S_RPT_op1 obtient une nouvelle adresse électronique ADR2 de l'utilisateur du terminal T1 à partir d'un identifiant public de l'utilisateur du terminal T1. Dans le mode de réalisation décrit ici, un tel identifiant public correspond au numéro de téléphone TEL1 de l'utilisateur du terminal T1.
Pour cela, lors d'une étape 50, le serveur S_RPT_op1 obtient le numéro de téléphone TEL1 de l'utilisateur du terminal T1 à partir de l'adresse ADR1 du message. En effet, suite à la réception du message, le serveur S_RPT_op1 détermine que l'adresse ADR1 n'est plus une adresse électronique valide car aucun utilisateur abonné auprès de l'opérateur op1 ne dispose de cette adresse ADR1. Le serveur S_RPT_op1 consulte donc la base de données clients BDD_cl_op1 pour vérifier si l'adresse électronique ADR1 correspond à une adresse électronique d'un ancien client de l'opérateur op1. Lorsque c'est le cas, le serveur S_RPT_op1 vérifie que l'utilisateur du terminal T1 a conservé son numéro de téléphone TEL1 lors de son changement d'opérateur. Par exemple, la base de données clients BDD_cl_op1 mémorise une information indiquant que le numéro de téléphone TEL1 a été porté dans la base de portabilité téléphonique. Puis, le serveur S_RPT_op1 obtient à partir de la base de données clients BDD_cl_op1 le numéro de téléphone TEL1 mémorisé dans la base de données clients BDD_cl_op1 en association avec l'adresse ADR1.
Lors d'une étape 51, le serveur S_RPT_op1 obtient un préfixe de portabilité associé au numéro de téléphone TEL1, en interrogeant la base de données de portabilité téléphonique BDD_tel. Un tel préfixe de portabilité correspond à un préfixe de l'opérateur op2.
Lors d'une étape 52, le serveur S_RPT_op1 obtient un nom de domaine associé à l'opérateur op2 en interrogeant la base de données de portabilité d'adresse électronique BDD_dom à l'aide dudit préfixe de portabilité. Selon l'exemple particulier de réalisation décrit ici, la base de données de portabilité d'adresse électronique BDD_dom mémorise des préfixes de portabilité téléphonique en association avec au moins un nom de domaine de l'opérateur correspondant au préfixe.
Lors d'une étape 53, le serveur S_RPT_op1 génère une nouvelle adresse électronique ADR3 comprenant le préfixe de portabilité, le numéro de téléphone TEL1 et le nom de domaine de l'opérateur op2.
Lors de l'étape 22, le serveur S_RPT_op1 remplace dans le champ d'adresse de destination l'adresse électronique ADR1 par l'adresse électronique ADR3 générée à l'étape 53.
Lors de l'étape 23, le serveur S_RPT_op1 transmet le message via le réseau de communication RES à destination du serveur S_RPT_op2 de réception de messages identifié par le nom de domaine compris dans l'adresse électronique ADR3. Pour cela, le serveur S_RPT_op1 interroge le serveur DNS de résolution de nom de domaine pour obtenir l'adresse IP associée au nom de domaine compris dans l'adresse électronique ADR3. Puis, le serveur S_RPT_op1 envoie le message au serveur S_RPT_op2 de réception de messages correspondant.
Classiquement, à la réception du message par le serveur S_RPT_op2, le serveur S_RPT_op2 interroge une base de données client de l'opérateur op2 pour vérifier que la partie utilisateur de l'adresse ADR3 correspond effectivement à un utilisateur abonné auprès de l'opérateur op2 et obtient l'adresse électronique ADR2 de l'utilisateur du terminal T1 mémorisée en association avec le numéro de téléphone TEL1 dans la base de données clients de l'opérateur op2. Le serveur S_RPT_op2 remplace l'adresse ADR3 par l'adresse ADR2 dans le champ de destination du message et mémorise le message dans un espace de réception de messages réservés à l'utilisateur du terminal T1. Eventuellement, le serveur S_RPT_op2 insère une information dans le message afin d'indiquer à l'utilisateur du terminal T1 que l'émetteur du message (l'utilisateur du terminal T2) n'utilise pas l'adresse ADR2 pour lui envoyer des messages.
Ainsi, l'utilisateur du terminal T1 pourra accéder au message via le logiciel client de son terminal T1 et le serveur de réception de messages S_RPT_op2.

Le procédé a été décrit ci-dessus dans le cas où les fonctions du serveur S_PRX sont mises en oeuvre par le serveur de réception de message S_RPT_op1 de l'opérateur op1. Selon une autre variante, les étapes 51-53 peuvent être mises en oeuvre par un serveur S_PRX distinct du serveur de réception de message S_RPT_op1 de l'opérateur op1. Dans ce cas, suite à l'étape 50, le serveur de réception de message S_RPT_op1 de l'opérateur op1 transmet le message au serveur S_PRX ainsi que le numéro de téléphone TEL1.
Pour plus de clarté, les modes particuliers de réalisation ont été décrits ici dans le cas où les fonctionnalités d'envoi/réception de messages connues de l'homme du métier sont mises en oeuvre par des serveurs d'émission/réception de messages des opérateurs réseau. En pratique, ces serveurs d'émission/réception de messages communiquent avec des serveurs proxy associés qui sont positionnés en interfaçage du réseau de communication et mettent en oeuvre certaines des fonctionnalités d'envoi/réception de messages. Le logiciel de messagerie d'un terminal communique avec le serveur d'envoi/réception de messages et le serveur d'envoi/réception de messages communique avec le serveur proxy qui effectue l'envoi ou la réception des messages vers ou depuis le réseau de communication.

La figure 6 illustre des étapes du procédé de portabilité d'une adresse électronique ADR d'un utilisateur selon un mode particulier de réalisation de l'invention. Le procédé de portabilité est mis en oeuvre par la base de données BDD_dom décrite en relation avec la figure 1 ou la figure 4.
Lors d'une étape 60, la base de données BDD_dom reçoit en provenance du serveur S_PRX une requête d'un identifiant comprenant au moins un nom de domaine.
Selon les modes de réalisation décrits en relation avec les figures 2 ou 3, l'identifiant correspond à une adresse électronique générique.
Selon le mode de réalisation décrit en relation avec la figure 5, l'identifiant correspond à un nom de domaine d'un opérateur.
La requête reçue par la base de données BDD_dom comprend au moins une information obtenue à partir de l'adresse électronique ADR.
Selon les modes de réalisation décrits en relation avec les figures 2 ou 3, l'information obtenue à partir de l'adresse électronique ADR correspond à l'adresse électronique ADR. Selon le mode de réalisation décrit en relation avec la figure 5, l'information obtenue à partir de l'adresse électronique ADR correspond à un préfixe de portabilité téléphonique obtenu à partir d'un numéro de téléphone d'un utilisateur de l'adresse électronique ADR.
Lors d'une étape 61, la base de données BDD_dom obtient l'identifiant à partir de l'information comprise dans la requête par consultation de la mémoire de la base de données BDD_dom dans laquelle l'information est mémorisée en association avec l'identifiant.

Lors d'une étape 62, la base de données BDD_dom fournit audit serveur S_PRX l'identifiant obtenu à l'étape 61. Un tel identifiant permet ensuite au serveur S_PRX d'obtenir une nouvelle adresse électronique ADR' destinée à remplacer une adresse électronique comprise dans un champ d'adresse d'émission ou de destination d'un message destiné à ou émis par l'utilisateur.

La figure 7 illustre la structure simplifiée d'un dispositif de transmission S_PRX configuré pour mettre en oeuvre le procédé de transmission selon l'un quelconque des modes particuliers de réalisation de l'invention décrits ci-dessus.
Le dispositif de transmission S_PRX comprend une mémoire MEM, une unité de traitement UT, équipée par exemple d'un processeur PROC, et pilotée par le programme d'ordinateur PG stocké en mémoire MEM. Le programme d'ordinateur PG comprend des instructions pour mettre en oeuvre les étapes du procédé de transmission tel que décrit précédemment, lorsque le programme est exécuté par le processeur PROC.
A l'initialisation, les instructions de code du programme d'ordinateur PG sont par exemple chargées dans une mémoire RAM avant d'être exécutées par le processeur PROC. Le processeur PROC de l'unité de traitement UT met notamment en oeuvre les étapes du procédé de transmission selon l'un quelconque des modes particuliers de réalisation décrits en relation avec les figures 2, 3 ou 5 selon les instructions du programme d'ordinateur PG. Pour cela, le dispositif de transmission comprend un module de communication COM configuré pour recevoir un message destiné à un premier utilisateur, ledit message comprenant une première adresse électronique d'un deuxième utilisateur, ladite première adresse électronique comprenant au moins un premier nom de domaine. L'unité de traitement est configurée pour obtenir, depuis au moins une base de données de portabilité d'adresse électronique, à partir d'un identifiant public du deuxième utilisateur, une deuxième adresse électronique du deuxième utilisateur, la deuxième adresse électronique comprenant au moins un deuxième nom de domaine différent du premier nom de domaine, et pour remplacer, dans le message, la première adresse électronique par la deuxième adresse électronique.
Le module de communication COM est également configuré pour transmettre le message à destination d'un serveur de réception de messages du premier utilisateur.
Selon un mode particulier de réalisation de l'invention, le dispositif de transmission S_PRX décrit précédemment est compris dans un serveur.

La figure 8 illustre la structure simplifiée d'un dispositif de portabilité configuré pour mettre en oeuvre le procédé de portabilité d'une première adresse électronique selon l'un quelconque des modes particuliers de réalisation de l'invention décrits ci-dessus.

Le dispositif de portabilité BDD_com comprend une mémoire MEM0, une unité de traitement UT0, équipée par exemple d'un processeur PROC0, et pilotée par le programme d'ordinateur PG0 stocké en mémoire MEM0. Le programme d'ordinateur PG0 comprend des instructions pour mettre en oeuvre les étapes du procédé de portabilité tel que décrit précédemment, lorsque le programme est exécuté par le processeur PROC0.
A l'initialisation, les instructions de code du programme d'ordinateur PG0 sont par exemple chargées dans une mémoire RAM avant d'être exécutées par le processeur PROC0. Le processeur PROC0 de l'unité de traitement UT0 met notamment en oeuvre les étapes du procédé de portabilité selon l'un quelconque des modes particuliers de réalisation décrits en relation avec la figure 6 selon les instructions du programme d'ordinateur PG0.
Pour cela, le dispositif de portabilité comprend un module de communication COM0 configuré pour recevoir, en provenance d'un serveur d'un réseau de communication, une requête d'un identifiant comprenant au moins un nom de domaine, ladite requête comprenant au moins une information obtenue à partir de ladite première adresse électronique.
L'unité de traitement UT0 est configurée pour obtenir l'identifiant à partir de l'information comprise dans la requête, à partir de la mémoire MEM0. Pour cela, la mémoire MEM0 est configurée pour stocker ledit identifiant en association avec l'information comprise dans la requête. Le module de communication COM0 est également configuré pour fournir au serveur du réseau de communication l'identifiant obtenu, l'identifiant permettant d'obtenir une deuxième adresse électronique dudit utilisateur.
Selon un mode particulier de réalisation de l'invention, le dispositif de portabilité BDD_dom décrit précédemment est compris dans une base de données ou un serveur.

Selon un autre mode particulier de réalisation de l'invention du procédé de transmission décrit en relation avec la figure 5, lors de l'étape 53, le serveur S_RPT_op1 génère une nouvelle adresse électronique ADR3 comprenant au moins le numéro de téléphone TEL1 et le nom de domaine de l'opérateur op2. Selon ce mode particulier de réalisation, le préfixe de portabilité de l'opérateur op2 peut être compris ou non dans la nouvelle adresse électronique ADR3.

## Revendications

1. Procédé de transmission à travers un réseau de communication, d'un message destiné à un premier utilisateur, ledit message comprenant, dans un champ d'adresse destination, une première adresse électronique du premier utilisateur, ladite première adresse électronique comprenant au moins un premier nom de domaine, le procédé comprend les étapes suivantes, sur réception (20) dudit message par un serveur du réseau de communication:
- obtention (21), à partir d'un numéro de téléphone associé au premier utilisateur, d'une deuxième adresse électronique dudit premier utilisateur, l'obtention de la deuxième adresse électronique comprenant les étapes suivantes, lorsque la première adresse électronique n'est pas valide:
- obtention (50) à partir d'une base de données clients d'un opérateur du premier nom de domaine, du numéro de téléphone à partir de la première adresse électronique,
- obtention (51) en provenance d'une base de données de portabilité téléphonique d'un préfixe de portabilité associé au numéro de téléphone,
- obtention (52) en provenance d'une base de données de portabilité d'adresse électronique d'un deuxième nom de domaine, à partir dudit préfixe de portabilité, le deuxième nom de domaine étant différent du premier nom de domaine,
- génération (53) de la deuxième adresse électronique comprenant au moins le numéro de téléphone et le deuxième nom de domaine,
- remplacement (22), dans le message, de la première adresse électronique par la deuxième adresse électronique,
- transmission (23) dudit message à destination d'un serveur de réception de messages du premier utilisateur.

2. Procédé de transmission selon la revendication 1, dans lequel la deuxième adresse électronique comprend également le préfixe de portabilité.

3. Procédé de transmission selon la revendication 1, dans lequel le message est reçu en provenance d'un serveur d'un opérateur de réseau associé au premier nom de domaine.

4. Dispositif de transmission, à travers un réseau de communication, d'un message destiné à un premier utilisateur, ledit message comprenant, dans un champ destination, une première adresse électronique du premier utilisateur, ladite première adresse électronique comprenant au moins un premier nom de domaine, le dispositif de transmission est configuré pour:
- recevoir (COM) ledit message,
- obtenir (UT), à partir du numéro de téléphone associé au premier utilisateur, une deuxième adresse électronique dudit premier utilisateur, via, lorsque la première adresse électronique n'est pas valide :
- l'obtention, à partir d'une base de données clients d'un opérateur du premier nom de domaine, du numéro de téléphone à partir de la première adresse électronique,
- l'obtention, en provenance d'une base de données de portabilité téléphonique, d'un préfixe de portabilité associé au numéro de téléphone,
- l'obtention, en provenance d'une base de données de portabilité d'adresse électronique, d'un deuxième nom de domaine, à partir dudit préfixe de portabilité, le deuxième nom de domaine étant différent du premier nom de domaine,
- la génération de la deuxième adresse électronique comprenant au moins le numéro de téléphone et le deuxième nom de domaine,
- remplacer (UT), dans le message, la première adresse électronique par la deuxième adresse électronique,
- transmettre (COM) ledit message à destination d'un serveur de réception de messages du premier utilisateur.

5. Serveur comprenant un dispositif selon la revendication 4.

6. Procédé de portabilité d'une première adresse électronique d'un utilisateur mis en oeuvre par une base de données de portabilité d'adresse électronique, ladite première adresse électronique comprenant au moins un premier nom de domaine, comprenant les étapes suivantes:
- réception (60) en provenance d'un serveur d'un réseau de communication, d'une requête d'un identifiant comprenant au moins un nom de domaine, ladite requête comprenant au moins un préfixe de portabilité téléphonique obtenu à partir d'un numéro de téléphone de l'utilisateur depuis une base de données de portabilité téléphonique, ledit numéro de téléphone de l'utilisateur étant également mémorisé en association avec la première adresse électronique dans une base de données clients d'un opérateur du premier nom de domaine,
- obtention (61) dudit identifiant à partir dudit préfixe de portabilité téléphonique , ledit identifiant étant un nom de domaine mémorisé dans la base de données de portabilité d'adresses électroniques en association avec ledit préfixe de portabilité téléphonique,
- fourniture (62) audit serveur du réseau de communication dudit identifiant obtenu, l'identifiant permettant d'obtenir une deuxième adresse électronique dudit utilisateur.

7. Base de données de portabilité d'une première adresse électronique d'un utilisateur, ladite première adresse électronique comprenant au moins un premier nom de domaine, la base de données est configurée pour:
- recevoir (COM0) en provenance d'un serveur d'un réseau de communication, une requête d'un identifiant, ladite requête comprenant au moins un préfixe de portabilité téléphonique obtenu à partir d'un numéro de téléphone de l'utilisateur depuis une base de données de portabilité téléphonique, ledit numéro de téléphone de l'utilisateur étant également mémorisé en association avec la première adresse électronique dans une base de données clients d'un opérateur du premier nom de domaine,
- obtenir (UT0)) ledit identifiant à partir dudit préfixe de portabilité téléphonique, ledit identifiant étant un nom de domaine mémorisé dans la base de données de portabilité d'adresse électronique en association avec ledit préfixe de portabilité téléphonique,
- fournir (COM0) audit serveur du réseau de communication ledit identifiant, l'identifiant permettant d'obtenir une deuxième adresse électronique dudit utilisateur.

8. Programme d'ordinateur comportant des instructions pour la mise en oeuvre du procédé de transmission selon l'une quelconque des revendications 1 à 3, ou pour la mise en oeuvre du procédé de portabilité selon la revendication 6, lorsque ledit programme est exécuté par un processeur.

9. Support d'enregistrement lisible par ordinateur sur lequel est enregistré un programme d'ordinateur comprenant des instructions de code de programme pour l'exécution des étapes du procédé de transmission selon l'une quelconque des revendications 1 à 3, ou pour la mise en oeuvre du procédé de portabilité selon la revendication 6, lorsque ledit programme est exécuté par un processeur.

10. Système de transmission à travers un réseau de communication, d'un message comprenant une première adresse électronique d'un utilisateur, ladite première adresse électronique comprenant au moins un premier nom de domaine, le système comprend au moins:
- un serveur de communication (S_PRX, S_RPT_op1) selon la revendication 5,
- une base (BDD_dom) de données de portabilité d'adresse électronique selon la revendication 7.

## Patentansprüche

1. Verfahren zum Übertragen einer für einen ersten Benutzer bestimmten Nachricht über ein Kommunikationsnetz, wobei die Nachricht in einem Zieladressenfeld eine erste elektronische Adresse des ersten Benutzers umfasst, wobei die erste elektronische Adresse mindestens einen ersten Domänennamen umfasst, wobei das Verfahren die folgenden Schritte beim Empfangen (20) der Nachricht durch einen Server des Kommunikationsnetzes umfasst:
- Erhalten (21) einer zweiten elektronischen Adresse des ersten Benutzers ausgehend von einer dem ersten Benutzer zugeordneten Telefonnummer, wobei das Erhalten der zweiten elektronischen Adresse die folgenden Schritte umfasst, wenn die erste elektronische Adresse nicht gültig ist:
- Erhalten (50) der Telefonnummer ausgehend von der ersten elektronischen Adresse über eine Kundendatenbank eines Betreibers des ersten Domänennamens,
- Erhalten (51) eines der Telefonnummer zugeordneten Portabilitätspräfixes aus einer Datenbank zur Telefonportabilität,
- Erhalten (52) eines zweiten Domänennamens aus einer Datenbank zur Portabilität von elektronischen Adressen ausgehend vom Portabilitätspräfix, wobei sich der zweite Domänenname vom ersten Domänennamen unterscheidet,
- Erstellen (53) der zweiten elektronischen Adresse, die mindestens die Telefonnummer und den zweiten Domänennamen umfasst,
- Ersetzen (22) der ersten elektronischen Adresse durch die zweite elektronische Adresse in der Nachricht,
- Übertragen (23) der Nachricht an einen Nachrichtenempfangsserver des ersten Benutzers.

2. Übertragungsverfahren nach Anspruch 1, wobei die zweite elektronische Adresse ebenfalls das Portabilitätspräfix umfasst.

3. Übertragungsverfahren nach Anspruch 1, wobei die Nachricht von einem Server eines Netzbetreibers empfangen wird, der dem ersten Domänennamen zugeordnet ist.

4. Vorrichtung zum Übertragen einer für einen ersten Benutzer bestimmten Nachricht über ein Kommunikationsnetz, wobei die Nachricht in einem Zieladressenfeld eine erste elektronische Adresse des ersten Benutzers umfasst, wobei die erste elektronische Adresse mindestens einen ersten Domänennamen umfasst, wobei die Übertragungsvorrichtung konfiguriert ist zum:
- Empfangen (COM) der Nachricht,
- Erhalten (UT) einer zweiten elektronischen Adresse des ersten Benutzers ausgehend von der dem ersten Benutzer zugeordneten Telefonnummer über folgende Schritte, wenn die erste elektronische Adresse nicht gültig ist:
- Erhalten der Telefonnummer ausgehend von der ersten elektronischen Adresse über eine Kundendatenbank eines Betreibers des ersten Domänennamens,
- Erhalten eines der Telefonnummer zugeordneten Portabilitätspräfixes aus einer Datenbank zur Telefonportabilität,
- Erhalten eines zweiten Domänennamens aus einer Datenbank zur Portabilität einer elektronischen Adresse ausgehend vom Portabilitätspräfix, wobei sich der zweite Domänenname vom ersten Domänennamen unterscheidet,
- Erstellen der zweiten elektronischen Adresse, die mindestens die Telefonnummer und den zweiten Domänennamen umfassst,
- Ersetzen (UT) der ersten elektronischen Adresse durch die zweite elektronische Adresse in der Nachricht,
- Übertragen (COM) der Nachricht an einen Nachrichtenempfangsserver des ersten Benutzers.

5. Server mit einer Vorrichtung nach Anspruch 4.

6. Verfahren zur Portabilität einer ersten elektronischen Adresse eines Benutzers, das durch eine Datenbank für die Portabilität elektronischer Adressen umgesetzt wird, wobei die erste elektronische Adresse mindestens einen ersten Domänennamen umfasst, die folgenden Schritte umfassend:
- Empfangen (60) von einem Server eines Kommunikationsnetzes einer Anfrage nach einer Kennung, die mindestens einen Domänennamen umfasst, wobei die Anfrage mindestens ein Präfix zur Telefonportabilität umfasst, das ausgehend von einer Telefonnummer des Benutzers aus einer Datenbank zur Telefonportabilität erhalten wird, wobei die Telefonnummer des Benutzers ebenfalls im Zusammenhang mit der ersten elektronischen Adresse in einer Kundendatenbank eines Betreibers des ersten Domänennamens gespeichert ist,
- Erhalten (61) der Kennung ausgehend vom Präfix zur Telefonportabilität, wobei die Kennung ein Domänenname ist, der in der Datenbank zur Portabilität elektronischer Adressen in Zusammenhang mit dem Präfix zur Telefonportabilität gespeichert ist,
- Bereitstellen (62) der erhaltenen Kennung an den Server des Kommunikationsnetzes, wobei die Kennung das Erhalten einer zweiten elektronischen Adresse des Benutzers ermöglicht.

7. Datenbank zur Portabilität einer ersten elektronischen Adresse eines Benutzers, wobei die erste elektronische Adresse mindestens einen ersten Domänennamen umfasst, wobei die Datenbank konfiguriert ist zum:
- Empfangen (COM0) von einem Server eines Kommunikationsnetzes einer Anfrage nach einer Kennung, wobei die Anfrage mindestens ein Präfix zur Telefonportabilität enthält, das ausgehend von einer Telefonnummer des Benutzers aus einer Datenbank zur Telefonportabilität erhalten wird, wobei die Telefonnummer des Benutzers ebenfalls im Zusammenhang mit der ersten elektronischen Adresse in einer Kundendatenbank eines Betreibers des ersten Domänennamens gespeichert ist,
- Erhalten (UT0) der Kennung ausgehend vom Präfix zur Telefonportabilität, wobei die Kennung ein Domänenname ist, der in der Datenbank zur Portabilität elektronischer Adressen im Zusammenhang mit dem Präfix zur Telefonportabilität gespeichert ist,
- Bereitstellen (COM0) der Kennung an den Server des Kommunikationsnetzes, wobei die Kennung das Erhalten einer zweiten elektronischen Adresse des Benutzers ermöglicht.

8. Computerprogramm mit Anweisungen zum Umsetzen des Übertragungsverfahrens nach einem der Ansprüche 1 bis 3 oder zum Umsetzen des Portabilitätsverfahrens nach Anspruch 6, wenn das Programm von einem Prozessor ausgeführt wird.

9. Speichermedium, das von einem Computer gelesen werden kann, auf dem ein Computerprogramm mit Programmcode-Anweisungen zur Ausführung der Schritte des Übertragungsverfahrens nach einem der Ansprüche 1 bis 3 oder zum Umsetzen des Portabilitätsverfahrens nach Anspruch 6, wenn das Programm von einem Prozessor ausgeführt wird, gespeichert ist.

10. System zur Übertragung einer Nachricht über ein Kommunikationsnetz, wobei die Nachricht eine erste elektronische Adresse eines Benutzers enthält, wobei die erste elektronische Adresse mindestens einen ersten Domänennamen enthält, wobei das System mindestens umfasst:
- einen Kommunikationsserver (S_PRX, S_RPT_op1) nach Anspruch 5,
- eine Datenbank (BDD_dom) für die Portabilität elektronischer Adressen nach Anspruch 7.

## Claims

1. Method for transmitting a message intended for a first user through a communication network, said message comprising, in a destination address field, a first electronic address of the first user, said first electronic address comprising at least one first domain name, the method comprises the following steps, upon reception (20) of said message by a server of the communication network:
- obtaining (21), on the basis of a telephone number associated with the first user, a second electronic address of said first user, obtaining the second electronic address comprising the following steps, when the first electronic address is not valid:
- obtaining (50), from a client database of an operator of the first domain name, the telephone number on the basis of the first electronic address,
- obtaining (51), from a telephone portability database, a portability prefix associated with the telephone number,
- obtaining (52), from an electronic address portability database, a second domain name, on the basis of said portability prefix, the second domain name being different from the first domain name,
- generating (53) the second electronic address comprising at least the telephone number and the second domain name,
- replacing (22) the first electronic address with the second electronic address in the message,
- transmitting (23) said message to a message reception server of the first user.

2. Transmission method according to Claim 1, wherein the second electronic address also comprises the portability prefix.

3. Transmission method according to Claim 1, wherein the message is received from a server of a network operator associated with the first domain name.

4. Device for transmitting a message intended for a first user through a communication network, said message comprising, in a destination field, a first electronic address of the first user, said first electronic address comprising at least one first domain name, the transmission device is configured so as to:
- receive (COM) said message,
- obtain (UT), on the basis of the telephone number associated with the first user, a second electronic address of said first user, by, when the first electronic address is not valid:
- obtaining, from a client database of an operator of the first domain name, the telephone number on the basis of the first electronic address,
- obtaining, from a telephone portability database, a portability prefix associated with the telephone number,
- obtaining, from an electronic address portability database, a second domain name, on the basis of said portability prefix, the second domain name being different from the first domain name,
- generating the second electronic address comprising at least the telephone number and the second domain name,
- replace (UT) the first electronic address with the second electronic address in the message,
- transmit (COM) said message to a message reception server of the first user.

5. Server comprising a device according to Claim 4.

6. Portability method for a first electronic address of a user, implemented by an electronic address portability database, said first electronic address comprising at least one first domain name, comprising the following steps:
- receiving (60), from a server of a communication network, a request for an identifier comprising at least one domain name, said request comprising at least one telephone portability prefix obtained on the basis of a telephone number of the user from a telephone portability database, said telephone number of the user also being stored in association with the first electronic address in a client database of an operator of the first domain name,
- obtaining (61) said identifier on the basis of said telephone portability prefix, said identifier being a domain name stored in the electronic address portability database in association with said telephone portability prefix,
- providing (62) said server of the communication network with said obtained identifier, the identifier making it possible to obtain a second electronic address of said user.

7. Portability database for a first electronic address of a user, said first electronic address comprising at least one first domain name, the database is configured so as to:
- receive (COM0), from a server of a communication network, a request for an identifier, said request comprising at least one telephone portability prefix obtained on the basis of a telephone number of the user from a telephone portability database, said telephone number of the user also being stored in association with the first electronic address in a client database of an operator of the first domain name,
- obtain (UT0) said identifier on the basis of said telephone portability prefix, said identifier being a domain name stored in the electronic address portability database in association with said telephone portability prefix,
- provide (COM0) said server of the communication network with said identifier, the identifier making it possible to obtain a second electronic address of said user.

8. Computer program including instructions for implementing the transmission method according to any one of Claims 1 to 3, or for implementing the portability method according to Claim 6, when said program is executed by a processor.

9. Computer-readable recording medium on which there is recorded a computer program comprising program code instructions for executing the steps of the transmission method according to any one of Claims 1 to 3, or for implementing the portability method according to Claim 6, when said program is executed by a processor.

10. System for transmitting a message comprising a first electronic address of a user through a communication network, said first electronic address comprising at least one first domain name, the system comprises at least:
- a communication server (S_PRX, S_RPT_op1) according to Claim 5,
- an electronic address portability database (BDD_dom) according to Claim 7.
